**Europäisches Patentamt**

**European Patent Office**

**Office européen des brevets**

(19)

(11) Publication number : **0 499 424 A2**

## (12) EUROPEAN PATENT APPLICATION

(21) Application number : **92301078.9**

(22) Date of filing : **10.02.92**

(51) Int. Cl.$^5$ : **G01N 22/04**

(30) Priority : **13.02.91 GB 9103066**

(43) Date of publication of application :
**19.08.92 Bulletin 92/34**

(84) Designated Contracting States :
**DE FR IT SE**

(71) Applicant : **GEC-MARCONI LIMITED**
**The Grove, Warren Lane**
**Stanmore, Middlesex HA7 4LY (GB)**

(72) Inventor : **Barr, Andrew Dexter**
**21 Chiswell Green Lane, Chiswell Green**
**St. Albans, Hertfordshire AL2 3AJ (GB)**

(74) Representative : **Keppler, William Patrick**
**Central Patent Department Wembley Office**
**The General Electric Company, p.l.c. Hirst**
**Research Centre East Lane**
**Wembley Middlesex HA9 7PP (GB)**

(54) **Fluid monitoring apparatus.**

(57) Apparatus for monitoring the composition of a dielectric fluid, in particular for detecting a change in its composition due to the presence of a contaminant. The fluid (2) is held in a two-cell structure (4) in which two portions of the fluid of different thickness $(t_A, t_B)$ are sandwiched by solid dielectric walls (8). A microwave signal is transmitted (5) through the two fluid-containing cells to measure (6,7) the insertion loss for both cells. The signal frequency is chosen such that, for the desired composition, the insertion loss is the same for both cells despite the difference in thickness of the fluid portions. This is achieved by selecting the dimensions and dielectric constant of the cell walls and the dimensions of the fluid portions to control the transmission and reflection coefficients at the cell wall/fluid interfaces. By comparing the transmission through the two cells (A,B), a change in the fluid composition can be detected. The apparatus can be used to monitor vehicle engine oil to detect contamination by water or fuel.

Fig. 3.

EP 0 499 424 A2

This invention relates to apparatus for monitoring the composition of a dielectric fluid. One application for apparatus in accordance with the invention is in monitoring the oil supply in a vehicle engine, in which the presence of even a small proportion of a contaminant such as water will rapidly cause serious damage if undetected. However, the invention is not limited to such an application.

The dielectric constant $\varepsilon_m$ of a fluid composed of a homogeneous mixture of constituent dielectric fluids is given by:

$$\ln \varepsilon_m = \Sigma\, p_i \ln \varepsilon_i \quad (1)$$

where $p_i$ is the prportion by volume of a constituent having a dielectric constant $\varepsilon_i$.

A change in the composition of such a mixture will thus manifest itself in a change in dielectric constant. This phenomenon is used in prior art apparatus for monitoring dielectric fluids. In such apparatus the dielectric constant is determined by measuring the electrical capacitance of a capacitor of which the fluid forms a part. Obtaining an accurate measurement of capacitance, and hence of the dielectric constant, is difficult. It is dependent, among other things, on precise spacing of the capacitor plates or probes.

It is an object of the invention to provide apparatus for monitoring the composition of a dielectric fluid by means of measurements which can be conveniently made on the fluid in its operational environment, and which provides greater accuracy than the known capacitance-measuring apparatus.

According to the present invention apparatus for monitoring the composition of a dielectric fluid comprises first and second cell means each comprising transmit and receive probes for an R.F. signal, each probe having a respective dielectric wall, the dielectric walls being arranged so that, in operation, each cell means comprises, in sequence, a transmit probe, a dielectric wall, a portion of the dielectric fluid, a dielectric wall and a receive probe, the two cell means having different insertion loss characteristics such that identical insertion loss values are exhibited by the two cell means at only one or several discrete signal frequencies, and the different insertion loss characteristics causing a shift in the frequency of identical insertion loss values in response to a change in the dielectric constant of the dielectric fluid. The transmit probe of each cell means is preferably a single probe common to both cell means.

Each probe may be at least partly surrounded by its respective dielectric wall and be sealed off from the dielectric liquid. Complete sea ling off is unnecessary if the depth of the dielectric fluid is limited and prevents access to the probe.

The two receive probes may be spaced at different distances from the transmit probe so that the RF signal is transmitted through sandwiched portions of the dielectric fluid of different thickness.

The probes and their respective dielectric walls may be mounted in a duct for the passage of the dielectric liquid. Continuous monitoring of a circulating or flowing fluid can be effected in such an arrangement.

The RF signal may have a predetermined frequency, the arrangement and the predetermined frequency being such that with a fluid of predetermined composition contained in the two cell means the power levels of the signals transmitted by the two cell means are equal. Such a situation is brought about by control of a number of factors, fluid constitution, fluid dimensions dielectric wall material and thickness, and probe arrangement.

The apparatus may include a comparator for comparing the power levels at the predetermined frequency and a threshold circuit responsive to a difference in the power levels which difference exceeds a predetermined threshold corresponding to an unacceptable composition of the fluid.

The apparatus may be used in determining the composition of a dielectric fluid composed of three known constituents, the apparatus then comprising means for determining the dielectric constant of the fluid from the insertion loss characteristic, means for measuring the loss tangent of the fluid, and means for determining from the measured dielectric constant and loss tangent the approximate proportions of the three constituents.

According to a feature of the invention, the apparatus may include means for control ling the frequency of the RF signal, and means for determining the frequency or frequencies of the RF signal for which the insertion losses through the two cell means are equal.

Apparatus in accordance with the invention will now be described, by way of example only, with reference to the accompanying drawings, of which:

Figure 1 shows a sandwiched dielectric structure for use in apparatus in accordance with the invention;

Figure 2(a) shows two differing structures of the same general type shown in Figure 1, and Figure 2(b) is a plot of the transmission characteristics of the two structures, showing their inter-relationship;

Figure 3 shows features of one apparatus in accordance with the invention which uses two such differing structures;

Figure 4 shows one antenna probe suitable for use in the apparatus of Figure 3;

Figure 5 shows one complete apparatus in accordance with the invention.

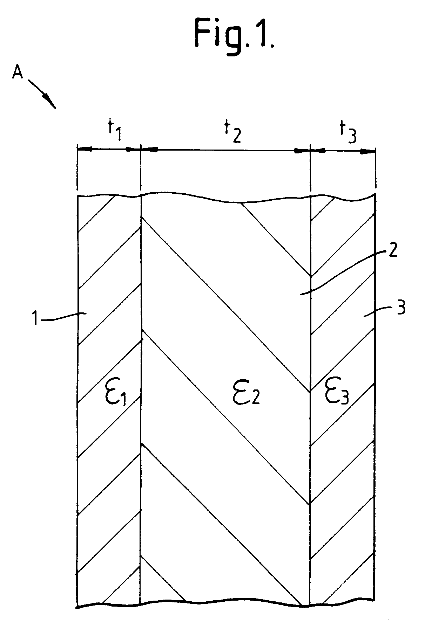

Figure 1 shows a multi-layered dielectric structure A comprising a dielectric core material 2 of dielectric constant $\varepsilon_2$, sandwiched by two dielectric walls 1 and 3 of dielectric constant $\varepsilon_1$ and $\varepsilon_3$ respectively. Such a structure is known in the field of radome design, in which the core material 2 is typically of a low dielectric constant compared with the outer skins 1,3. The theory of transmission of electromagnetic radiation through such a structure is applied to determine the values $\varepsilon_1$, $\varepsilon_2$ and $\varepsilon_3$ and the layer thicknesses $t_1$, $t_2$ and $t_3$ which are needed to produce a desired transmission characteristic.

In accordance with the invention, it is proposed to transmit an RF signal through a structure of the type shown in Figure 1, in which the core material 2 comprises the dielectric fluid whose composition is to be monitored. As used herein 'RF' includes microwave frequencies.

If the three layer thicknesses are known and the walls 1,3 comprise known dielectric material, then the dielectric constant of the sandwiched fluid can be determined, or variation in its value detected, from the transmitted power/RF frequency relationship.

For such a known sandwich structure (hereinafter referred to as a 'cell') the transmission characteristic, i.e. the insertion loss, over a limited range of applied RF frequency is essentially dependent on the dielectric constants of the sandwiched fluid and the dielectric walls, and the reflection coefficients at the interfaces. Thus, in principle, it is possible, in accordance with the invention, to monitor the dielectric constant (to ensure that it is in accordance with the desired fluid composition) by comparing the measured characteristic over a predetermined frequency range with each of a set of stored characteristics for fluid compositions of known dielectric constant. However, such 'curve matching' is not particularly easy to implement and is likely to be expensive in terms of hardware required or computation time or both.

If it is required only to monitor the fluid to check that its composition falls within defined acceptable limits, this can be more easily achieved, for instance, by measuring the transmission characteristic at a number of spot frequencies and determining the deviation from a 'nonmal' characteristic. For improved sensitivity, the cell A may be so designed and the particular frequency range monitored may be such that significant variation in the insertion loss of the RF signal will occur for a comparatively small change in the fluid composition.

To alleviate the aforementioned difficulties, in accordance with preferred embodiments of the invention, two cells of known sandwich structure are used, both subject to the same RF signal. If the two cells are identical and one contains a sample of fluid of the desired composition while the other contains fluid the composition of which is to be monitored, then the first-mentioned cell provides a convenient reference characteristic for detecting a change in the composition of the monitored fluid. This arrangement provides useful flexibility since it avoids the need to store any reference characteristics. A further advantage is that the effect of any temperature change on the value of the dielectric constant can be discounted, both cells and their fluids being identically affected, However, it is not always convenient to provide and maintain a sample of the fluid of the desired composition. This disadvantage is overcome in accordance with the invention.

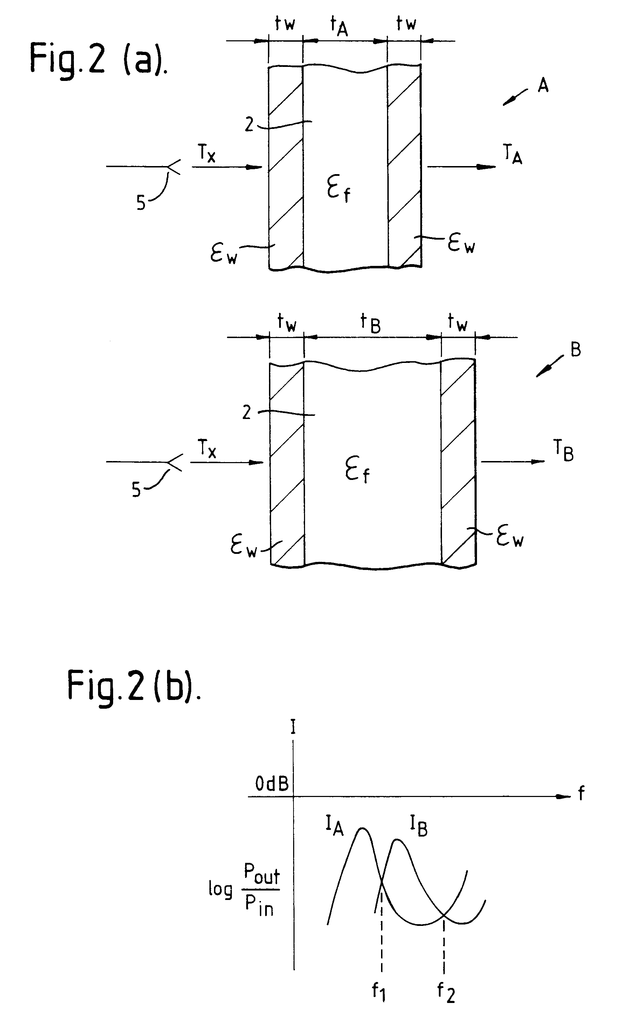

In one preferred embodiment of the invention, two known but different cells A,B are used, as shown, by way of example, in Figure 2(a). Both cells contain the same dielectric fluid 2 to be monitored. In this example, the cells A,B differ only in the thickness of the fluid layer, $t_A$ in cell A and $t_B$ in cell B, the thickness $t_w$ and the dielectric constant $\varepsilon_w$ of all the cell walls being the same, although this is not essential. If both cells are subjected to the same RF signal of power $T_x$, then two different transmission characteristics are obtained corresponding to the transmitted powers $T_A$ and $T_B$. One cell may be regarded as providing a (variable) reference power level with which the power output of the other cell may be compared. The curves shown in Figure 2(b) represent the insertion loss characteristics I of the two cells, i.e. the ratio of the input power $T_x$ to the output power $T_A$ or $T_B$ over a range of frequency f. It will be apparent that the insertion loss may be determined by measuring the output power for a fixed input power $T_x$ or by measuring the input power required to produce a fixed output power. It will be noted that the loss characteristic is not a simple function of frequency, which fact enables the cells A,B to be designed so that, for a reasonable range of values of the dielectric constant $\varepsilon_f$ of the fluid 2, the characteristics $I_A$, $I_B$ intersect at one or more frequencies, as indicated by $f_1$,$f_2$ in the figure. The advantage of this arrangement is that, for each possible value of the dielectric constant $\varepsilon_f$, there is a unique frequency, or set of frequencies, at which the insertion losses $I_A$,$I_B$ become equal, i.e. the power levels $T_A$,$T_B$ transmitted by the two cells are the same. An absolute measurement of dielectric constant is thus obtainable by using a variable frequency RF signal source to sweep through the frequency range and noting the frequency or frequencies at which such equality of power levels occurs.

Alternatively, and preferably, where the value of the dielectric constant corresponding to the desired composition of the fluid is known, a fixed frequency RF signal at a frequency such as $f_1$ or $f_2$ may be used. When the composition of the fluid changes, the two insertion loss characteristics $I_A$,$I_B$ will change in such a way that the two power levels $T_A$,$T_B$ become unequal at the predetermined operating frequency. The difference between the two power levels provides a measure of the change in the fluid composition. It will be appreciated that this measure could be obtained in other ways, such as by determining a new frequency at which the power levels become equal or by measuring a new difference between two such new frequencies.

The transmission characteristics of the two cells may be tailored by choice of the wall and fluid thicknesses and the wall material so that a small change in the fluid dielectric constant from its nominal value produces a substantial divergence of the power levels at the operating frequency. In this way an accurate and sensitive monitoring apparatus is achieved. Computer modelling has demonstrated that using the aforedescribed techniques it is possible to detect changes in dielectric constant of less than 0.1%.

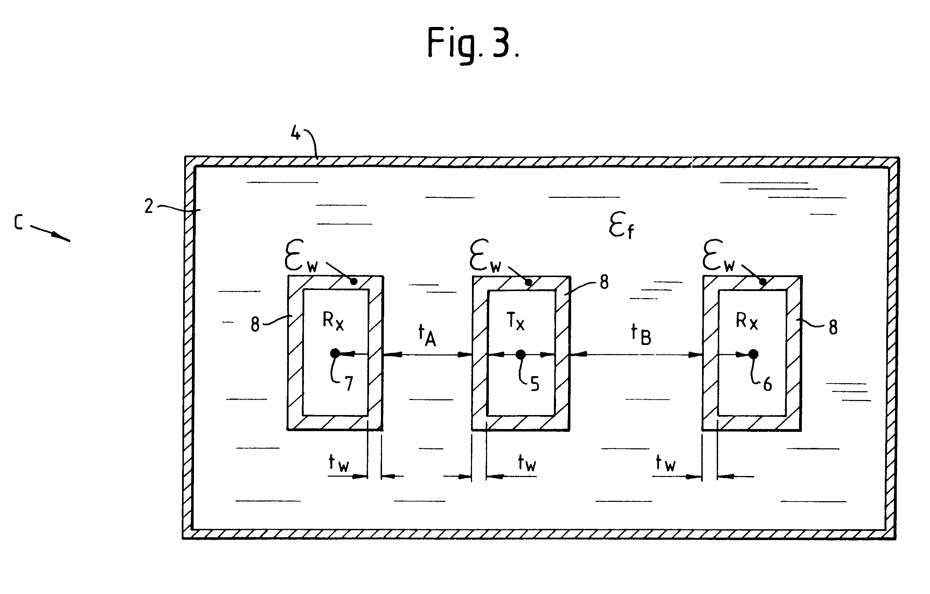

Figure 3 shows how the cells A and B may be realised in a practical sensor unit C. The fluid 2 being monitored is held in a container 4. The RF signal is emitted by an antenna probe 5 and received by each of two antenna probes 6 and 7. Separate transmit probes with a common feed or identical feeds, could be used but a single omnidirectional probe avoids the possibility of different signals transmitted to the two cells. The two receive probes 6,7 are spaced different distances from the transmit probe 5, so that the thicknesses $t_A, t_B$ of the two sandwiched portions of fluid 2 are unequal. Each of the three antenna probes is surrounded by a dielectric casing 8 of uniform wall thickness. The casing 8 physically isolates the probe from the surrounding fluid 2. Thus, it can be seen that cell A is realised by the fluid portion of thickness $t_A$ sandwiched by the dielectric walls disposed between probes 5 and 7. Cell B is similarly realised by the fluid portion of thickness $t_B$ sandwiched by the dielectric walls disposed between probes 5 and 6. The space between each probe and the inside of the wall casing may be filled with a low dielectric constant foam or simply with air. The container wall is preferably made of a highly lossy dielectric to minimise internal reflections and to prevent the leakage of stray radiation.

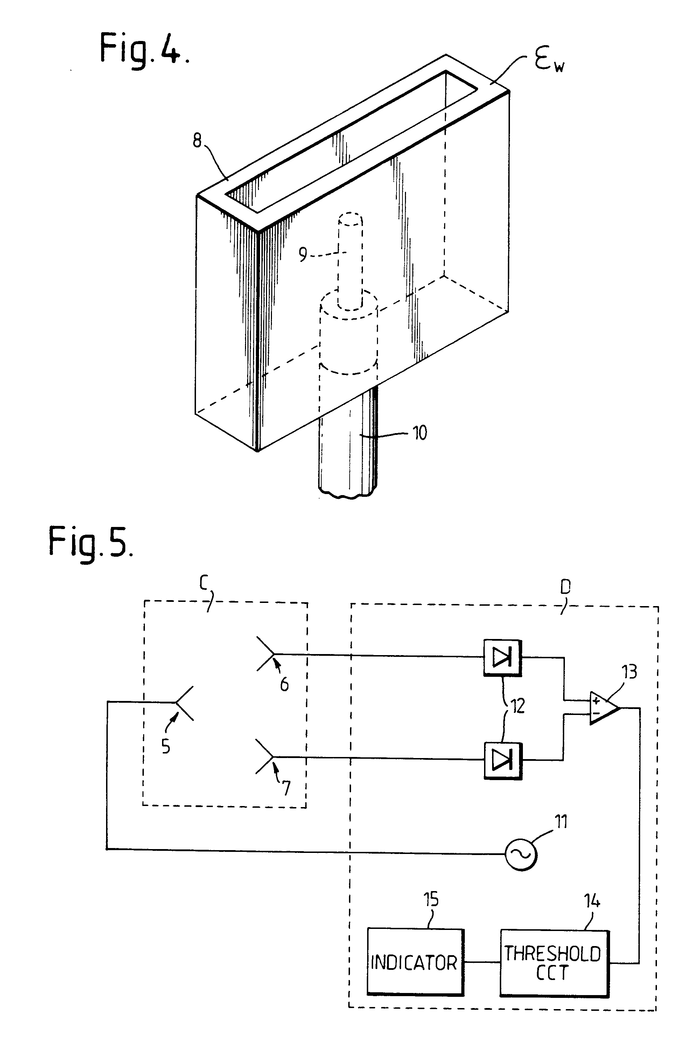

Figure 4 shows one possible construction of the antenna probes in unit C. Each probe comprises an omnidirectional monopole element 9 having a coaxial cable feed 10. The two receive probes need not be omnidirectional, but there is trade-off to be considered between the cost saving of having three identical antenna probes and a reduction in reflection effects which can be obtained by using directional receive probes.

Figure 5 shows the sensor unit C of Figure 3 connected to an electronics unit D to form a complete minitoring apparatus. The unit D comprises a microwave oscillator 11, which may operate at, say, 10GHz, and which is coupled to the transmit probe 5 in the unit C. The outputs from the two receive probes 6,7 are coupled via respective detection stages 12 to the inputs of a comparator 13. A threshold circuit 14 is connected to the comparator output and drives an indicator 15.

The frequency of the oscillator 11 is chosen so that for the desired composition of the fluid in unit C, the two detected power levels are equal. When the two levels differ by more than a predetermined amount the threshold circui 14 activates the indicator 15 to indicate that the fluid composition has changed.

One application for the invention is in monitoring the condition of vehicle engine oil, in particular for contamination by fuel or water. The calculations below are idealised in that they treat each contaminant separately and assume a homogeneous mixture of contaminant and oil, but they serve to give an indication of the detectable proportions of such contaminants.

In the case of only two constituents:

$$\ln \varepsilon_m = p_1 \ln \varepsilon_1 + p_2 \ln \varepsilon_2 \quad (2)$$

and

$$p_1 + p_2 = 1$$

where $p_i$ is the proportion of the constituent having dielectric constant $\varepsilon_i$.

If the detectable change in the dielectric constant, $\varepsilon_1$ of the principal constituent is 0.1%, then

$$\ln (1.001 \, \varepsilon_1) = (1 - p_2) \ln \varepsilon_1 + p_2 \ln \varepsilon_2 \quad (3)$$

and the detectable proportion $p_2$ of the contaminant is given by:

$$p_2 = \frac{\ln (1.001)}{(\ln \varepsilon_2 - \ln \varepsilon_1)} \quad (4)$$

Assuming the following values of dielectric constant (at approximately 10GHz):

| | |
|---|---|
| lubricating oil | 2.25 |
| diesel | 2.1 |
| water | 38 |

the detectable proportion of water in oil is approximately 0.04% and the detectable proportion of diesel in oil is approximately 1.4%. Thus it can be seen that very small quantities of contaminant in engine oil can be detected using apparatus in accordance with the invention.

In such an application, the apparatus conveniently comprises the two units C,D described with reference to Figures 3 and 5. The sensor unit C alone is installed in the hostile environment of the vehicle engine, for example immediately 'downstream' of the oil filter, whereas the electronics unit D may be installed in the more benign environment of the dashboard, where the indicator can provide an immediate warning to the driver.

Apparatus in accordance with the invention has application in analysis of the fluid output at an oil well-head. The following calculations assume a homogeneous mixture of oil, water and gas only. There may well be other constituents present such as sand and shale.

Even assuming a mixture of only three known constituents, the problem to be solved is significantly more difficult than in the previously described application of detecting a contaminant in oil. First, it is now necessary to determine the dielectric constant of the mixture. Second, the presence of three rather than two constituents in the mixture results in ambiguities in the analysis which can only be resolved by the measurement of another parameter, for example the loss tangent, the electrical conductivity, or the density of the mixture. For an apparatus operating at microwave frequencies measurement of the loss tangent is preferred.

The dielectric constant can be written in complex form as:

$$\varepsilon = \varepsilon' + i\varepsilon'' \quad (5)$$

and the loss tangent:

$$\tan \delta = \frac{\varepsilon''}{\varepsilon'}$$

Now, referring back to equation (1):

$$\ln \varepsilon = \Sigma p_i \ln \varepsilon_i$$

In this application, this becomes:

$$\ln \varepsilon_m = p_l \ln \varepsilon_l + p_g \ln \varepsilon_g + p_w \ln \varepsilon_w \quad (6)$$

where:

$\varepsilon_m$ is the dielectric constant of the mixture and $p_l$, $p_g$, $p_w$ are the proportions by volume of oil, gas and water, respectively.

$\varepsilon_l$, $\varepsilon_g$, $\varepsilon_w$, are the dielectric constants of oil, gas and water, respectively.

Now, since

$$\varepsilon_g \approx 1$$

it is a reasonable approximation to put

$$\ln \varepsilon_g = 0$$

(Error introduced by this approximation is ~ 0%).

$$\therefore \ln \varepsilon_m = p_l \ln \varepsilon_l + p_w \ln \varepsilon_w \quad (7)$$

where

$$p_l + p_w \leqq 1 \quad (8)$$

From (7)

$$\epsilon_m = \epsilon_l^{p_l} \cdot \epsilon_w^{p_w}$$

$$= \left( \epsilon'_l + i\,\epsilon''_l \right)^{p_l} \left( \epsilon'_w + i\,\epsilon''_w \right)^{p_w}$$

$$.. \quad (9)$$

$$\epsilon_m = \epsilon'_m + i\,\epsilon''_m = \left( \epsilon'_l \right)^{p_l} \left( 1 + i\,\frac{\epsilon''_l}{\epsilon'_l} \right)^{p_l} \left( \epsilon'_w \right)^{p_w}$$

$$x \quad \left( 1 + i\,\frac{\epsilon''_w}{\epsilon'_w} \right)^{p_w} \quad .. \quad (10)$$

$$\epsilon'_m + i\,\epsilon''_m = \left(\epsilon'_l\right)^{p_l}\,\left(\epsilon'_w\right)^{p_w}\,\left[1 + \left(\frac{\epsilon''_l}{\epsilon'_l}\right)^2\right]^{p_l/2}$$

$$\times\,\left[1 + \left(\frac{\epsilon''_w}{\epsilon'_w}\right)^2\right]^{p_w/2}\,\left\{\cos\left[p_l\left(\tan^{-1}\frac{\epsilon''_l}{\epsilon'_l}\right)\right]\right.$$

$$+\,i\,\sin\left[p_l\left(\tan^{-1}\frac{\epsilon''_l}{\epsilon'_l}\right)\right]\right\}\,\times\,\left\{\cos\left[p_w\left(\tan^{-1}\frac{\epsilon''_w}{\epsilon'_w}\right)\right]\right.$$

$$+\,i\,\sin\left[p_w\left(\tan^{-1}\frac{\epsilon''_w}{\epsilon'_w}\right)\right]\right\}\qquad ..\ (11)$$

Putting $\left(\epsilon'_l\right)^{p_l}\,\left(\epsilon'_w\right)^{p_w}\,\left[1 + \left(\frac{\epsilon''_l}{\epsilon'_l}\right)^2\right]^{p_l/2}$

$$\times\,\left[1 + \left(\frac{\epsilon''_w}{\epsilon'_w}\right)^2\right]^{p_w/2}\ =\ A\ \ \text{in (11)}$$

and comparing real and imaginary components:

$$\epsilon'_m = A \left\{ \cos\left[ p_l \left( \tan^{-1} \frac{\epsilon_l''}{\epsilon_l'} \right) \right] \cos\left[ p_w \left( \tan^{-1} \frac{\epsilon_w''}{\epsilon_w'} \right) \right] \right.$$

$$\left. - \sin\left[ p_l \left( \tan^{-1} \frac{\epsilon''_l}{\epsilon_l'} \right) \right] \sin\left[ p_w \left( \tan^{-1} \frac{\epsilon_w''}{\epsilon_w'} \right) \right] \right\}$$

.. (12)

$$\epsilon''_m = A \left\{ \cos\left[ p_l \left( \tan^{-1} \frac{\epsilon_l''}{\epsilon_l'} \right) \right] \sin\left[ p_w \left( \tan^{-1} \frac{\epsilon_w'}{\epsilon_w'} \right) \right] \right.$$

$$\left. + \sin\left[ p_l \left( \tan^{-1} \frac{\epsilon_l''}{\epsilon_l'} \right) \right] \cos\left[ p_w \left( \tan^{-1} \frac{\epsilon_w''}{\epsilon_w'} \right) \right] \right\}$$

.. (13)

Dividing (13) by (12) and substituting the standard trigonometrical relationships:

$$\frac{\epsilon_m''}{\epsilon_m'} = \tan\left[ p_l \tan^{-1} \frac{\epsilon_l''}{\epsilon_l'} + p_w \tan^{-1} \frac{\epsilon_l''}{\epsilon_l'} \right]$$

.. (14)

$$\therefore \quad \tan \delta_m \;=\; \tan \left[ p_l \; \tan^{-1} (\tan \delta_l) \right.$$

$$\left. + \; p_w \; \tan^{-1} (\tan \delta_w) \right] \qquad .. \;(15)$$

Now since $\varepsilon_l$, $\varepsilon_w$, $\tan \delta_l$ and than $\delta_w$ are known, and $\tan \delta_m$ and $\varepsilon_m$ can be measured, the values of $p_l$ and $p_w$ can be derived from equations (7) and (15).

Accordingly for an application in which it is required to determine the composition of a fluid composed of a mixture of three known constituents, the apparatus comprises means for determining the dielectric constant of the fluid in the manner described previously, means for measuring the loss tangent of the fluid, and means for calculating (according to the above equations) the approximate proportions of the three constituents. Measurement of the loss tangent is well-known in the art.

To determine the proportions of more than three constituents requires a further parameter of the mixture to be measured for each additional constituent.

## Claims

1. Apparatus for monitoring the composition of a dielectric fluid (2), the apparatus comprising first and second cell means (A,B) each comprising transmit (5) and receive (6,7) probes for an RF signal, each probe (5,6,7) having a respective dielectric wall (8), the dielectric walls (8) being arranged so that, in operation, each cell means (A,B) comprises, in sequence, a transmit probe (5), a dielectric wall (8), a portion of said dielectric fluid (2), a dielectric wall (8) and a receive probe (6,7), the two cell means (A,B) having different insertion loss characteristics $(I_A, I_B)$ such that identical insertion loss values are exhibited by the two cell means (A,B) at only one or several discrete signal frequencies $(f_1, f_2)$, and the different insertion loss characteristics $(I_A, I_B)$ causing a shift in the frequency ($f_1$ or $f_2$) of identical insertion loss values in response to a change in the dielectric constant ($_f$) of said dielectric fluid (2).

2. Apparatus according to Claim 1, wherein the transmit probe of each cell means (A,B) is a single probe (5) common to both cell means.

3. Apparatus according to Claim 2, wherein each probe (5,6,7) is at least partly surrounded by its respective dielectric wall (8) and is sealed off from said dielectric liquid.

4. Apparatus according to Claim 2 or Claim 3, wherein said two receive probes (6,7) are spaced different distances $(t_a, t_b)$ from said transmit probe (5) so that said RF signal is transmitted through sandwiched portions of said dielectric fluid (2) of different thickness.

5. Apparatus according to Claim 3 or Claim 4, wherein the probes (5,6,7) and their respective dielectric walls (8) are mounted in a duct (4) for the passage of said dielectric liquid (2).

6. Apparatus according to Claim 3, wherein said RF signal has a predetermined frequency $(f_1, f_2)$, the arrangement and the predetermined frequency $(f_1, f_2)$ being such that with a fluid of predetermined composition contained in the two cell means (A,B) the power levels of the signals transmitted by the two cell means are equal.

7. Apparatus according to Claim 6, including a comparator (13) for comparing said power levels at said predetermined frequency and a threshold circuit (14) responsive to a difference in the power levels which exceeds a predetermined threshold corresponding to an unacceptable composition of said fluid.

8. Apparatus according to Claim 7, further including indicating means (15) adapted to indicate when said predetermined threshold is exceeded.

9. Apparatus according to any one of the preceding claims for use in determining the composition of a dielectric fluid (2) composed of three known constituents, the apparatus comprising means for determining the dielectric constant of said fluid from said insertion loss characteristic, means for measuring the loss tangent of said fluid, and means for determining from the measured dielectric constant and loss tangent the approximate proportions of said three constituents.

10. Apparatus according to any of Claims 1 to 5, including means for controlling the frequency of said RF signal, and means for determining the frequency or frequencies of said RF signal for which the insertion losses through the two cell means are equal.

# Fig.1.

Fig.2 (a).

Fig.2 (b).

# Fig. 3.

# Fig.4.

# Fig.5.